# EUROPEAN PATENT APPLICATION

(11) **EP 4 283 151 A1**
(43) Date of publication of application: **29.11.2023**
(21) Application number: 23175127.2
(22) Date of filing: 24.05.2023
(51) Int. Cl.: F16D 25/0638, B60K 17/28

(54) **FORCE INTENSIFYING, MULTI-CHAMBERED CLUTCH ACTUATION SYSTEM FOR POWER TAKE-OFF**

(30) Priority: 25.05.2022 US 202263345466 P
(71) Applicant: Parker-Hannifin Corporation, Cleveland, OH 44124-4141 (US)
(72) Inventor: MUFF, Derek E, Carol Stream, 60188 (US); SAMLOW, Maxwell A, Memphis, 38103 (US)
(74) Representative: Haseltine Lake Kempner LLP

(57) **Abstract**

A power take-off includes a hollow housing that is adapted to be supported on a source of rotational energy. An input mechanism supported within the housing is adapted to be rotatably driven by the source of rotational energy, and an output mechanism supported within the housing is adapted to rotatably drive a rotatably driven accessory. A clutch is operable in an engaged condition, wherein the input mechanism rotatably drives the output mechanism, and a disengaged condition, wherein the input mechanism does not rotatably drive the output mechanism. A clutch actuator selectively operates the clutch in the engaged and disengaged conditions and includes a primary clutch cylinder, a primary clutch piston that is supported for movement relative to the primary clutch cylinder, and a secondary clutch piston that is supported for movement relative to the primary clutch cylinder and the primary clutch piston.

## Description

### CROSS REFERENCE TO RELATED APPLICATION

This application claims the benefit of United States Provisional Application No. 63/345,466, filed May 25, 2022, the disclosure of which is incorporated herein by reference.

### BACKGROUND OF THE INVENTION

This invention relates in general to power take-offs for transmitting rotational energy from a source of rotational energy to a rotatably driven accessory. In particular, this invention relates to an improved structure for such a power take-off that includes a force intensifying, multi-chambered, clutch actuator.

A power take-off is a well-known mechanical device that is often used in conjunction with a source of rotational energy, such as a vehicle engine or transmission, to transfer rotational energy to a rotatably driven accessory, such as a hydraulic pump that is supported on the vehicle. For example, power take-offs are commonly used on industrial and agricultural vehicles to transfer rotational energy from the vehicle engine or transmission to one or more hydraulic pumps that, in turn, are used to operate one or more hydraulically driven accessories provided on the vehicle, such as plows, trash compactors, lifting mechanisms, winches, and the like. The power take-off provides a simple, inexpensive, and convenient means for transferring energy from the source of rotational energy to the hydraulic pump that, in turn, can be operated to transfer relatively high pressure fluid to operate the driven accessory.

A typical power take-off includes a housing, an input mechanism, and an output mechanism. The power take-off housing is adapted to be supported on a housing of the source of rotational energy. The power take-off housing includes an opening that is aligned with a corresponding opening provided in the housing of the source of rotational energy. The input mechanism of the power take-off includes a portion (typically a spur gear) that extends outwardly from the power take-off housing through the aligned openings and into the housing of the source of rotational energy. In this manner, the input mechanism of the power take-off is connected to the source of rotational energy so as to be rotatably driven whenever the source of rotational energy is operated. The output mechanism of the power take-off is rotatably driven by the input mechanism and is adapted to be connected to the rotatably driven accessory. In some instances, the input mechanism of the power take-off is directly connected to the output mechanism such that the rotatably driven accessory is operated whenever the source of rotational energy is operated. In other instances, a clutch assembly is provided between the input mechanism and the output mechanism such that the rotatably driven accessory is operated only when the clutch assembly is engaged while the source of rotational energy is operated.

In some instances, the power take-off may be designed to allow the clutch assembly to be safely engaged and/or disengaged at any time without any decoupling gears within the power take-off gear train (including when the power take-off is being rotatably driven by the source of rotational energy and, therefore, while torque is being transmitted through the power take-off). Such power take-offs (often referred to as hotshift power take-offs) utilize pressurized fluid from the transmission to actuate the clutch assembly, which permits the output shaft of the power take-off to be decoupled from the rotation of the rotatably driven transmission.

It is known that the amount of engagement force that can be exerted by the clutch assembly of the power take-off is directly related to the amount of torque that can be transmitted through the power take-off when it is engaged. Because the size of the clutch assembly is generally related to the amount of this engagement force, the maximum amount of such engagement force is, at least in some instances, limited by the amount of physical space that is available in the vicinity of the vehicle where the power take-off is located.

As vehicular chassis designs become increasingly complicated (and, as a result, the amount of physical space that is available in the vicinity of the vehicle where the power take-off is located becomes increasingly limited), it would be desirable to provide an improved structure for a power take-off that provides additional torque capacity, but does not require a significant additional amount of physical space to be available in the vicinity of the vehicle where the power take-off is located.

The solution to increasing the torque capacity in a power take-off design has been historically solved by increasing the diameter of the clutch, which increases the surface area upon which the pressurized fluid can act on. One deficiency in this solution, however, occurs when the designs of the chassis components and the transmission case require a smaller power take-off footprint, but still require the same (or greater) torque carrying capacity. This problem has been addressed by increasing the number of clutch plates in the clutch pack of the power take-off, which allows for additional friction surfaces to be acted on by the pressurized fluid available from the transmission without altering the overall diameter thereof. This solution works well for power take-offs having a relatively small number of such clutch plates. However, this solution has diminishing returns as number of clutch plates within the power take-off increases. Thus, it would be desirable to provide an improved structure for a power take-off that provides additional torque capacity, but does not require a significant additional amount of physical space in the vicinity of the vehicle where the power take-off is located.

### SUMMARY OF THE INVENTION

This invention relates to an improved structure for a power take-off that includes a force intensifying, multi-chambered, clutch actuator that provides additional torque capacity, but does not require a significant additional amount of physical space in the vicinity of the vehicle where the power take-off is located. The power take-off of this invention includes a multiple-chambered clutch system that permits the amount of the engagement force that is generated by the clutch to be increased, without increasing the line pressure from the transmission or the overall diameter of the physical size of the clutch system. This results in additional power density in the clutch and, ultimately, more power-dense solutions and increased-torque capacities.

Various aspects of this invention will become apparent to those skilled in the art from the following detailed description of the preferred embodiment, when read in light of the accompanying drawings.

### BRIEF DESCRIPTION OF THE DRAWINGS

Fig. 1 is a sectional elevational view of a conventional power take-off that is supported on a source of rotational energy.
Fig. 2 is an enlarged sectional elevational view of a modified portion of the conventional power take-off illustrated in Fig. 1 that includes a force intensifying, multi-chambered, clutch actuator in accordance with this invention.

### DETAILED DESCRIPTION OF THE PREFERRED EMBODIMENT

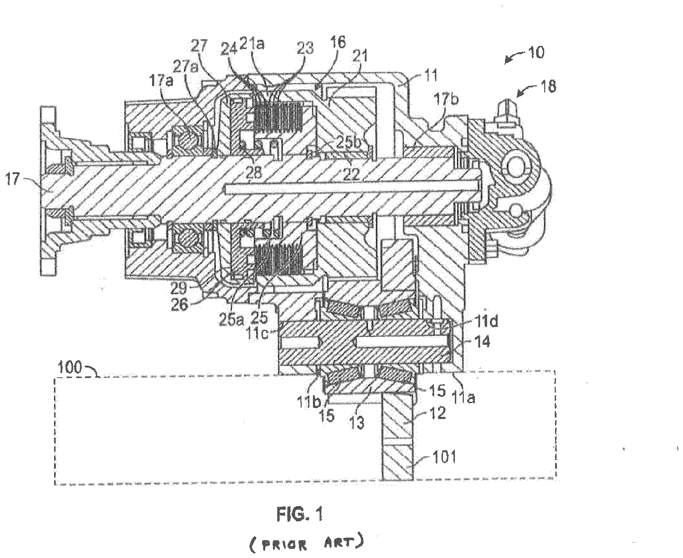

Referring now to the drawings, there is illustrated in Fig. 1 a sectional elevational view of a power take-off, indicated generally at 10, in accordance with this invention. The basic structure and mode of operation of the power take-off 10 are well known in the art, and only those portions of the power take-off 10 that are necessary for a complete understanding of the invention will be described. Also, the illustrated power take-off 10 is intended merely to illustrate one environment in which this invention may be used. Thus, the scope of this invention is not intended to be limited for use with the specific structure of the power take-off 10 illustrated in Fig. 1 or with power take-offs in general. On the contrary, as will become apparent below, this invention may be used in any desired environment for the purposes described below.

The illustrated power take-off 10 includes a hollow housing 11 having a mounting surface 11a provided thereon. An opening 11b is provided through the mounting surface 11a of the power take-off housing 11. The power take-off 10 has an input mechanism that includes an input gear 12 that is rotatably supported within the power take-off housing 11. As shown in Fig. 1, a portion of the input gear 12 extends outwardly through the opening 11b provided through the mounting surface 11a.

The mounting surface 11a of the power take-off housing 11 is adapted to be secured (typically by a plurality of bolts - not shown) to a corresponding mounting surface provided on a housing of a source of rotational energy 100, such as an engine or a transmission of a vehicle. As is well known in the art, the portion of the input gear 12 that extends through the opening 11b of the power take-off housing 11 also extends through a corresponding opening (not shown) provided in the housing of the source of rotational energy 100 into engagement with a driving gear 101 or other mechanism provided therein. Thus, the input gear 12 of the power take-off 10 is rotatably driven whenever the driving gear 101 contained within the source of rotational energy 100 is rotatably driven.

The illustrated input gear 12 is splined onto or otherwise supported on an input gear hub 13 for concurrent rotation to form a conventional input cluster gear. However, it is known to form the input gear 12 and the input gear hub 13 integrally from a single piece of material. In either event, the input gear hub 13 is, in turn, rotatably supported on an input shaft 14 by one or more bearings 15. First and second ends of the illustrated input shaft 14 are respectively (and typically non-rotatably) supported in first and second bores 11c and 11d provided in the power take-off housing 11.

The power take-off 10 also includes a clutch assembly, indicated generally at 16, for selectively connecting the input gear hub 13 (and, thus, the input gear 12 supported thereon) to an output shaft 17. The output shaft 17 is, in turn, adapted to be connected to the rotatably driven accessory (not shown). The illustrated output shaft 17 is rotatably supported on the power take-off housing 11 by a pair of bearings 17a and 17b or other similar means. When the clutch assembly 16 is engaged, the input gear hub 13 is connected to the output shaft 17 for concurrent rotation. Thus, the rotatably driven accessory is rotatably driven by the source of rotational power when the clutch assembly 16 is engaged. Conversely, when the clutch assembly 16 is disengaged, the input gear hub 13 is disconnected from the output shaft 17. Thus, the rotatably driven accessory is not rotatably driven by the source of rotational power when the clutch assembly 16 is disengaged. A conventional shifter assembly, indicated generally at 18, may be provided to selectively engage and disengage the clutch assembly 16 in a known manner.

The clutch assembly 16 of the power take-off 10 includes a drive gear 21 that is rotatably supported on the output shaft 17 by a bearing 22 and is rotatably driven by the input gear hub 13. The illustrated drive gear 21 includes an axially-extending hollow cylindrical bell portion 21a having a splined inner surface. The illustrated drive gear 21 is formed integrally from a single piece of material with the hollow cylindrical bell portion 21a. However, it is known to form the drive gear 21 and the hollow cylindrical bell portion 21a from separate components that are splined or otherwise connected together for concurrent rotation. In either event, a plurality of flat annular clutch plates 23 is splined to the inner splined surface of the hollow cylindrical bell portion 21a of the drive gear 21 for rotation therewith. Thus, the drive gear 21 and the clutch plates 23 are constantly rotatably driven by the input gear 12.

A plurality of annular friction plates 24 is disposed in an alternating fashion between the clutch plates 23. The friction plates 24 are splined to an outer splined surface provided on an axially extending cylindrical portion 25a of a clutch gear 25 for rotation therewith. The clutch gear 25 is splined or otherwise secured to the output shaft 17 for rotation therewith. Thus, the friction plates 24, the clutch gear 25, and the output shaft 17 are connected for rotation together as a unit. The clutch gear 25 is restrained from axial movement in one direction (toward the right when viewing Fig. 1) by one or more retaining rings 25b that are mounted on the output shaft 17, for a purpose that will be explained below.

An annular clutch piston 26 is provided for selectively causing the clutch plates 23 and the friction plates 24 to frictionally engage one another so as to engage the clutch assembly 16. To accomplish this, the clutch piston 26 is disposed within a hollow cylindrical clutch cylinder 27. The clutch cylinder 27 has a closed end and an opened end. One end of the clutch piston 26 (the left end when viewing Fig. 1) is disposed within the clutch cylinder 27, while the opposite end of the clutch piston 26 (the right end when viewing Fig. 1) extends from the opened end of the clutch cylinder 27 adjacent to the interleaved set of clutch plates 23 and friction plates 24. Both the clutch piston 26 and the clutch cylinder 27 are supported on the output shaft 17. The clutch piston 26 is axially movable along the output shaft 17, but the clutch cylinder 27 is restrained from axial movement in one direction (toward the left when viewing Fig. 1) by one or more retaining rings 27a that are mounted on the output shaft 17 for a purpose that will be explained below.

A coiled clutch spring 28 reacts between the clutch piston 26 and the clutch gear 25. As discussed above, the clutch gear 25 is restrained from axial movement in one direction (toward the right when viewing Fig. 1) by the retaining ring 25b. Thus, the clutch spring 28 urges the clutch piston 26 axially in the opposite direction (toward the left when viewing Fig. 1) toward a disengaged position adjacent to the closed end of the clutch cylinder 27. In the disengaged position, the clutch piston 26 does not engage the clutch plates 23 or the friction plates 24. Thus, the clutch plates 23 and the friction plates 24 do not frictionally engage one another. As a result, the clutch gear 25 is disconnected from the drive gear 21 so as to provide no rotatable driving connection therebetween.

To engage the clutch assembly 16, the shifter assembly 18 is actuated to supply pressurized fluid to an annular clutch chamber 29 defined between the clutch piston 26 and the closed end of the clutch cylinder 27. As a result, the clutch piston 26 is moved axially in the one direction (toward the right when viewing Fig. 1) toward an engaged position. In the engaged position, the clutch piston 26 causes the clutch plates 23 and the friction plates 24 to frictionally engage one another. As a result, the clutch gear 25 is connected to the drive gear 21 so as to provide a rotatable driving connection therebetween.

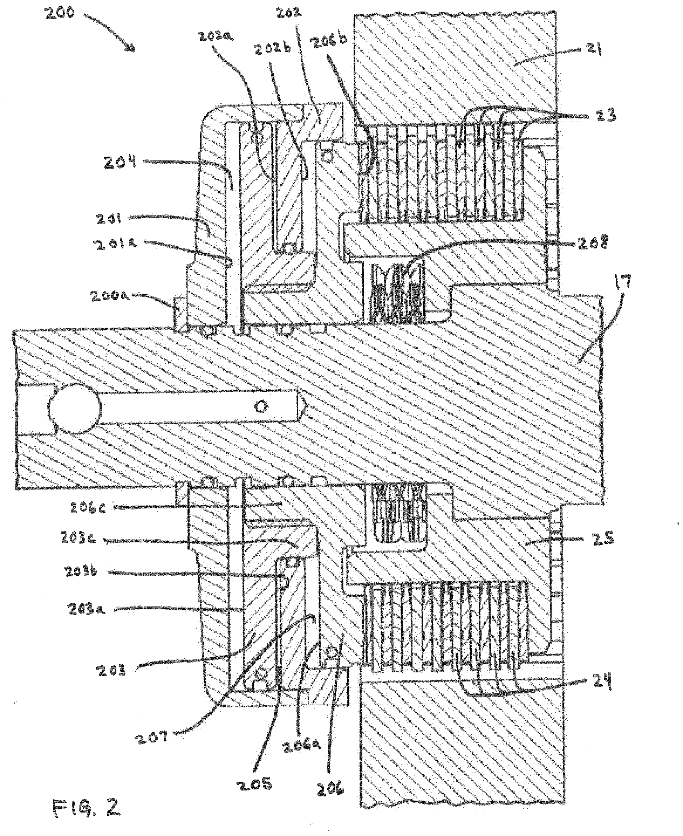

Fig. 2 is an enlarged sectional elevational view of a modified portion of the conventional power take-off 10 illustrated in Fig. 1 that includes a force intensifying, multi-chambered, clutch actuator, indicated generally at 200, in accordance with this invention. The illustrated clutch actuator 200 of this invention includes a primary clutch cylinder 201 that is supported on the output shaft 17 of the power take-off 10. The primary clutch cylinder 201 is preferably restrained from axial movement relative to the output shaft 17 in one direction (toward the left when viewing Fig. 2) in any desired manner, such as by one or more retaining rings 200a that are mounted on the output shaft 17 as shown in Fig. 2. The primary clutch cylinder 201 has a closed end (the left end when viewing Fig. 2) and an opened end (the right end when viewing Fig. 2). The interior of the closed end of the primary clutch cylinder 201 defines an axially-facing surface 201a, the purpose of which will be explained below.

A clutch cylinder extension 202 is supported on the opened end of the primary clutch cylinder 201. The clutch cylinder extension 202 includes a radially-inwardly extending portion that defines both a first axially-facing surface 202a (the left surface when viewing Fig. 2) and a second axially-facing surface 202b (the right surface when viewing Fig. 2). The purposes of these first and second axially-facing surfaces 202a and 202b will be explained below.

A primary clutch piston 203 is supported on the primary clutch cylinder 201 for axial movement relative thereto. In the illustrated embodiment, the primary clutch piston 203 is supported within the primary clutch cylinder 201 between the axially-facing surface 201a of the primary clutch cylinder 201 and the first axially-facing surface 202a of the clutch cylinder extension 202. More specifically, a first axially-facing surface 203a of the primary clutch piston 203 (the left surface when viewing Fig. 2) is disposed adjacent to the axially-facing surface 201a of the primary clutch cylinder 201. Thus, a first pressure chamber 204 is defined between the axially-facing surface 201a of the primary clutch cylinder 201 and the first axially-facing surface 203a of the primary clutch piston 203. The purpose for this first pressure chamber 204 will be explained below.

Additionally, a second axially-facing surface 203b of the primary clutch piston 203 (the right surface when viewing Fig. 2) is disposed adjacent to the first axially-facing surface 202a of the clutch cylinder extension 202. Thus, a intermediate chamber 205 is defined between the second axially-facing surface 203b of the primary clutch piston 203 and the first axially-facing surface 202a of the clutch cylinder extension 202. For reasons that will become apparent below, the intermediate chamber 205 is vented from the clutch actuator 200, typically to the interior of the power take-off 10. Lastly, the primary clutch piston 203 includes an annular axially-extending portion 203c, the purpose of which will also be explained below.

A secondary clutch piston 206 is supported on the assembly of the primary clutch cylinder 201 and the clutch cylinder extension 202 for axial movement relative thereto. Thus, the clutch cylinder extension 202 functions as a secondary clutch cylinder for supporting the secondary clutch piston 206 of the clutch actuator 200 for such relative axial movement. In the illustrated embodiment, the secondary clutch piston 206 is supported on the assembly of the primary clutch cylinder 201 and the clutch cylinder extension 202 (i.e., the secondary clutch cylinder) such that a first axially-facing surface 206a of the secondary clutch piston 206 (the left surface when viewing Fig. 2) is disposed adjacent to the second axially-facing surface 202b of the intermediate member 202. Thus, a second pressure chamber 207 is defined between the second axially-facing surface 202b of the intermediate member 202 and the first axially-facing surface 206a of the secondary clutch piston 206. The purpose for this second pressure chamber 207 will be explained below.

A second axially-facing surface 206b of the secondary clutch piston 206 is disposed adjacent to the assembly of the clutch plates 23 and the friction plates 24 of the power take-off 10 described above. Lastly, the secondary clutch piston 206 includes an annular axially-extending portion 206c that, in the illustrated embodiment, both is supported on the output shaft 17 and supports the annular axially-extending portion 203c of the primary clutch piston 203. The annular axially-extending portion 203c of the primary clutch piston 203 extends axially past the intermediate member 202 and adjacent to the first axially-facing surface 206a of the secondary clutch piston 206. The purposes for these structures will also be explained below.

A clutch spring 208 is positioned to react between the secondary clutch piston 206 of the modified clutch actuator 200 and the clutch gear 25 of the power take-off 10. In the illustrated embodiment, the clutch spring 208 is embodied as a plurality of annular wave springs, although such is not required. As discussed above in connection with Fig. 1, the clutch gear 25 is restrained from axial movement in one direction (toward the right when viewing Fig. 2) relative to the output shaft 17. Thus, in a similar manner as discussed above in connection with Fig. 1, the clutch spring 208 urges the secondary clutch piston 206 axially in the opposite direction (toward the left when viewing Fig. 2) toward a disengaged position adjacent to the closed end of the primary clutch cylinder 201. At the same time, the secondary clutch piston 206 engages the annular extension portion 203c of the primary clutch piston 203 and, as a result, urges the primary clutch piston 203 toward the disengaged position adjacent to the closed end of the primary clutch cylinder 201. In the disengaged position, the secondary clutch piston 204 does not engage the clutch plates 23 or the friction plates 24. Thus, the clutch plates 23 and the friction plates 24 do not frictionally engage one another. As a result, the clutch spring 208 normally causes the clutch actuator 200 to be disengaged so as to provide no rotatable driving connection therebetween.

To engage the modified clutch actuator 200, the shifter assembly 18 is actuated to provide a supply of a pressurized fluid to either, or both, of the first pressure chamber 204 and the second pressure chamber 207. The pressurized fluid may be provided from any desired source including, for example, a source of pressurized liquid from a transmission on the vehicle, a source of pressurized air from a compressor tank supported on the vehicle, or any other known or conventional mechanism or apparatus. The pressurized fluid may be supplied to either, or both, of the first pressure chamber 204 and the second pressure chamber 207 in any desired manner, such as through either a single common port or plural separate ports.

When it is desired to actuate the primary clutch piston 203 from the disengaged position (relative to the primary clutch cylinder 201) illustrated in Fig. 2 to an engaged position, pressurized fluid is supplied to the first pressure chamber 204. When a sufficient amount of such pressurized fluid has been supplied to the first pressure chamber 204, the urging of the clutch spring 208 is overcome, and the primary clutch piston 203 (as well as the secondary clutch piston 206 that is supported on the primary clutch piston 203) are moved axially in the one direction (toward the right when viewing Fig. 2) against the urging of the clutch spring 208 toward the engaged position (relative to the primary clutch cylinder 201). As a result, a first amount of pressure is exerted against the assembly of the clutch plates 23 and the friction plates 24, and the clutch assembly 16 is engaged in a first mode of operation.

Thereafter, if it is desired to additionally actuate the secondary clutch piston 206 from the disengaged position (relative to the primary clutch piston 203) illustrated in Fig. 2 to an engaged position, pressurized fluid is supplied to the second pressure chamber 207 to further overcome the urging of the clutch spring 208. When a sufficient amount of such pressurized fluid has been supplied to the second pressure chamber 207, the urging of the clutch spring 208 is further overcome, and the secondary clutch piston 204 is moved axially in the one direction (toward the right when viewing Fig. 2) against the urging of the clutch spring 208 toward the engaged position (relative to the primary clutch piston 203). As a result, a second amount of pressure (which is greater than the first amount of pressure) is additionally exerted against the assembly of the clutch plates 23 and the friction plates 24, and the clutch assembly 16 is engaged in a second mode of operation.

In some instances, it may be desirable to actuate only the secondary clutch piston 204 from the disengaged position (relative to the primary clutch piston 203) illustrated in Fig. 2 to an engaged position. To accomplish this, pressurized fluid is initially supplied only to the second pressure chamber 207 (and not to the first pressure chamber 204). When a sufficient amount of such pressurized fluid has been supplied to the second pressure chamber 207, the urging of the clutch spring 208 is overcome, and the secondary clutch piston 206 is moved axially in the one direction (toward the right when viewing Fig. 2) against the urging of the clutch spring 208 toward the engaged position (relative to the primary clutch piston 203). As a result, the second amount of pressure is exerted against the assembly of the clutch plates 23 and the friction plates 24, and the clutch assembly 16 is engaged in a third mode of operation.

In each of these instances, the modified clutch actuator 200 causes the clutch plates 23 and the friction plates 24 to frictionally engage one another. As a result, the clutch assembly 16 is engaged to connect clutch gear 25 of the power take-off 10 to the drive gear 21 so as to provide a rotatable driving connection therebetween. Depending upon whether the pressurized fluid has been supplied to only the first pressure chamber 204, only the second pressure chamber 207, or both the first pressure chamber 204 and the second pressure chamber 207, the magnitude of such frictional engagement can be selected or otherwise controlled as desired. When the pressurized fluid is supplied to both the first pressure chamber 204 and the second pressure chamber 207, the illustrated piston-on-piston arrangement effectively increases the overall surface area upon which the pressurized fluid pressure acts, thereby increasing the amount of force that the modified clutch actuator 200 can exert on the assembly of the clutch plates 23 and the friction plates 24. Such increase in the amount of force is desirably accomplished without significantly increasing the overall physical size of the modified clutch actuator 200.

The principle and mode of operation of this invention have been explained and illustrated in its preferred embodiment. However, it must be understood that this invention may be practiced otherwise than as specifically explained and illustrated without departing from its spirit or scope.

## Claims

1. A power take-off comprising:
a housing adapted to be supported on a source of rotational energy;
an input mechanism supported within the housing and adapted to be rotatably driven by the source of rotational energy;
an output mechanism supported within the housing and adapted to rotatably drive a rotatably driven accessory; and
a clutch that is operable in both an engaged condition, wherein the input mechanism rotatably drives the output mechanism, and a disengaged condition, wherein the input mechanism does not rotatably drive the output mechanism; and
a clutch actuator that selectively causes the clutch to be operated in the engaged and disengaged conditions, the clutch actuator including:
a primary clutch cylinder;
a primary clutch piston that is supported for movement relative to the primary clutch cylinder; and
a secondary clutch piston that is supported for movement relative to the primary clutch cylinder and the primary clutch piston.

2. The power take-off defined in Claim 1 wherein the primary clutch piston includes a portion that is structured and configured to engage the secondary clutch piston when the clutch is operated in the engaged condition.

3. The power take-off defined in Claim 1 or 2 wherein the primary clutch cylinder has an interior that extends from a closed end of the primary clutch cylinder to an opened end of the primary clutch cylinder, and wherein the primary clutch piston is supported within the interior of the primary clutch cylinder for movement relative thereto.

4. The power take-off defined in Claim 3 wherein a first pressure chamber is defined between the closed end of the primary clutch cylinder and the primary clutch piston, wherein the first pressure chamber is structured and configured to receive a pressurized fluid that urges the primary clutch piston to move relative to the primary clutch cylinder.

5. The power take-off defined in any preceding Claim further including a clutch cylinder extension that is supported on the primary clutch cylinder, wherein the secondary clutch piston is supported on the clutch cylinder extension for movement relative to the primary clutch cylinder and the primary clutch piston.

6. The power take-off defined in Claim 5 wherein a second pressure chamber is defined between the clutch cylinder extension and the secondary clutch piston, wherein the second pressure chamber is structured and configured to receive a pressurized fluid that urges the secondary clutch piston to move relative to the primary clutch cylinder and the primary clutch piston.

7. The power take-off defined in Claim 6 wherein the primary clutch piston includes an extension portion that is structured and configured to engage the secondary clutch piston when the first pressure chamber receives the pressurized fluid.

8. The power take-off defined in any preceding Claim further including a clutch cylinder extension that is supported on the primary clutch cylinder, wherein the secondary clutch piston is supported on the clutch cylinder extension for movement relative to the primary clutch cylinder and the primary clutch piston.

9. The power take-off defined in Claim 8 wherein a second pressure chamber is defined between the clutch cylinder extension and the secondary clutch piston, wherein the second pressure chamber is structured and configured to receive a pressurized fluid that urges the secondary clutch piston to move relative to the primary clutch cylinder and the primary clutch piston.

10. The power take-off defined in Claim 9 wherein the primary clutch piston includes an extension portion that is structured and configured to engage the secondary clutch piston.

11. The power take-off defined in any preceding Claim further including a spring that urges the clutch to be operated in the disengaged condition.

12. The power take-off defined in Claim 11 wherein the spring includes a plurality of waves springs.
